# EUROPÄISCHE PATENTANMELDUNG

(11) **EP 0 562 376 A1**
(43) Veröffentlichungstag der Anmeldung: **29.09.1993**
(21) Anmeldenummer: 93103910.1
(22) Anmeldetag: 11.03.1993
(51) Int. Cl.: G11B 5/70

(54) **Magnetischer Aufzeichnungsträger**

(30) Priorität: 21.03.1992 DE 4209290
(71) Anmelder: BASF Magnetics GmbH, D-68165 Mannheim (DE)
(72) Erfinder: Schelble, Josef, Dr., W-8000 Muenchen 70 (DE); Sauter, Juergen, W-6730 Neustadt (DE); Schmidt, Juergen, W-8000 Muenchen 40 (DE); Schroeer, Wolf-Dieter, Dr., W-8000 Muenchen 70 (DE)
(74) Vertreter: Karau, Wolfgang, Dr.

(57) **Zusammenfassung**

Beschrieben ist ein magnetischer Aufzeichnungsträger insbesondere für hochdichte Videoaufzeichnung, welcher gutes Laufverhalten, extrem geringen Abrieb und sehr niedrige Dropout-Werte zeigt und wobei als magnetisches Pigment ein feinteiliges Metallpulver oder eine Metallpulver-Legierung eingesetzt ist. Die geforderten Eigenschaften wurden dadurch erreicht, daß als Bindemittel eine Mischung von Vinylpolymer und einem Polycarbonat-Polyurethan und als Dispergierhilfsmittel ein carbonsäurehaltiges Polyalkylenoxidacrylat eingesetzt wird. Die magnetische Schicht besitzt einen Elastizitätsmodul in Längs- und Querrichtung von mindestens 5500 MPa.

## Beschreibung

Die Erfindung betrifft einen magnetischen Aufzeichnungsträger, bestehend aus einem unmagnetischen Schichtträger mit mindestens einer darauf aufgetragenen magnetischen Dispersion, welche feinteilige magnetische Metallpulver oder Metall-Legierungspulver enthält, welche in einer Mischung von polymeren Bindemitteln, bestehend aus einem Vinylpolymer und einem Polycarbonatpolyurethan in Gegenwart von Dispergierhilfsmitteln feinverteilt sind.

In magnetischen Aufzeichnungsträgern wird insbesondere in jüngster Zeit die Forderung nach einer hohen Aufzeichnungsdichte erhoben. Ein wesentlicher Bestandteil solcher Aufzeichnungsträger sind ferromagnetische Metallpulver oder Metall-Legierungspulver, welche in einem Gemisch von polymeren Bindemitteln feinverteilt vorliegen. Im Lauf des Herstellungsprozesses solcher Aufzeichnungsträger muß die magnetische Schichtoberfläche geglättet werden, sei es durch feinere Verteilung der magnetischen Dispersion oder eine spezielle Oberflächenbehandlung. Als Nachteil ist damit jedoch verbunden, daß die hohen Anforderungen an das Gleichlaufverhalten und das Dauerlaufverhalten nicht mehr eingehalten werden können. Deswegen wurde versucht, durch Einsatz bestimmter Ruße die Laufeigenschaften und das Dauerlaufverhalten derartiger Aufzeichnungsträger zu verbessern.

Ein magnetischer Aufzeichnungsträger der oben genannten gattungsmäßigen Art ist aus der DE 39 08 425 bekannt. In dieser Schrift ist ein leitfähiger Ruß mit einer BET-Oberfläche in der Größenordnung von 1000 m²/g in einer Menge von 5 - 15 Gewichtsteilen bezogen auf das magnetische Pigment in der Dispersion vorliegt, wobei dieser Ruß mit einem Polyiminpolyester als Dispergierhilfsmittel vorbelegt worden ist. Dieser Zusatz macht jedoch die magnetische Schicht zu weich, so daß bei Dauerlaufprüfungen der Abrieb und die Dropout-Rate zu groß wird, so daß keine ausreichenden Schichteigenschaften für ein solches Magnetband mit hochdichten Aufzeichnungen erzielt wird.

Der Erfindung lag die Aufgabe zugrunde, einen magnetischen Aufzeichnungsträger zu finden, welcher sowohl gutes Laufverhalten wie auch geringen Abrieb, niedrige Dropout-Rate bei gleichzeitig ausgezeichneten magnetischen Eigenschaften in sich vereinigt.

Es wurde gefunden, daß ein gutes Laufverhalten eines derartigen Aufzeichnungsträgers nur mit einer hohen Bandsteifigkeit zu erreichen war. Diese wurde dadurch erzielt, daß in dem magnetischen Aufzeichnungsträger mit der bereits beschriebenen Zusammensetzung als Dispergierhilfsmittel statt des Polyiminpolyesters eine dispergieraktive Verbindung (Dispergierharz) nämlich ein Polyalkylenoxid, welches wenigstens eine polare Gruppe enthält, eingesetzt wurde. Eine solche Schichtzusammensetzung hat besonders in den Fällen, wenn das magnetische Metallpigment eine spezifische Schichtoberfläche von mehr als 35 m²/g hat, die der Erfindung zugrundeliegende Aufgabe erfüllt. Erhalten wird dabei ein Elastizitätsmodul der magnetischen Schicht in Längs- und Querrichtung von mindestens 5500 MPa.

Bei der Ausarbeitung dieser Erfindung stellte sich heraus, daß das Mischungsverhältnis der beiden Bindemittel, nämlich Polycarbonat-Polyurethan zu Vinyl-Copolymer im Verhältnis von 2 : 1 bis 1 : 2 eingestellt werden kann. Ist der Polycarbonat-Polyurethan-Anteil höher als vorstehend angegeben, so wird der Elastizitätsmodul der magnetischen Schicht zu niedrig; ist dagegen der Anteil des Vinyl-Chlorid-Copolymers zu hoch, so verschlechtern sich die Eigenschaften des magnetischen Aufzeichnungsträgers beim Kalandrieren und beim Längsschneiden. Ebenso verschlechtern sich die Eigenschaften, falls statt des Polycarbonat-Polyurethans ein Polyester-Polyurethan eingesetzt wird. Besonders geeignet als Dispergierharz ist ein carbonsäurehaltiges Polyalkylenoxidacrylat.

Als Gleitmittel brauchbar ist eine Mischung aus Myristinsäure, Butylpalmitat und Butylstearat. Die erfindungsgemäße Zusammensetzung ist besonders geeignet für magnetische Aufzeichnungsträger, welche für eine hochdichte Aufzeichnung bestimmt sind, beispielsweise 8 mm Videoband, Professional-Videobänder auf Metallpulverbasis wie Betacam-SP sowie Datenbänder.

Nachfolgend wird die Erfindung anhand von Beispielen und Vergleichsbeispielen näher dargestellt.

### Beispiel 1

| | Gew.% |
|---|---|
| Co-dotiertes feinteiliges Eisenpulver (BET = 58 m²/g, H_{c} = 125 kA/m) | 65 |
| Vinylchlorid-Copolymer | 6 |
| Polycarbonat-Polyurethan | 12 |
| Carbonsäurehaltiges Polyalkylenoxidacrylat (Dispergator) | 4 |
| Aluminiumoxid | 7 |
| Isocyanat (Vernetzer) | 2 |
| Gleitmittel | 2,2 |

Lösungsmittel zur Herstellung der Dispersion: Tetrahydrofuran

| | |
|---|---|
| Trockenschichtdicke: | 3,5 µm |
| Schichtträger-Dicke: | 24 µm |

### Beispiel 2

Wie Beispiel 1, jedoch mit folgender Zusammensetzung

| | Gew.% |
|---|---|
| Co-dotiertes feinteiliges Eisenpulver (BET = 58 m²/g, H_{c} = 125 kA/m) | 65 |
| Vinylchlorid-Copolymer | 12 |
| Polycarbonat-Polyurethan | 6 |
| Carbonsäurehaltiges Polyalkylenoxidacrylat (Dispergator) | 4 |
| Aluminiumoxid | 7 |
| Isocyanat | 2 |
| Gleitmittel | 2,2 |

### Vergleichsbeispiel 1

In der Zusammensetzung gemäß Beispiel 1 wurde das Polycarbonat-Polyurethan durch ein Polyester-Polyurethan ersetzt.

### Vergleichsbeispiel 2

| | Gew.% |
|---|---|
| Co-dotiertes feinteiliges Eisenpulver (BET = 58 m²/g, H_{c} = 125 kA/m) | 65 |
| Vinylchlorid-Copolymer | 6 |
| Polycarbonat-Polyurethan | 12 |
| Polyiminpolyester | 7 |
| Aluminiumoxid | 7 |
| Isocyanat | 2 |
| Gleitmittel | 2,2 |

**Tabelle**

| Zusammensetzung | E-Modul (MPa) | Knoop-Härte der Magnetschicht (kp/mm²) | Laufverhalten |
|---|---|---|---|
| Beispiel 1 | 5 800 | 13 | gut |
| Beispiel 2 | 6 900 | 16 | gut |
| Vergl.-Beispiel 1 | 4 400 | 11 | schlecht |
| Vergl.-Beispiel 2 | 4 600 | 12 | schlecht |

Das Laufverhalten wurde in handelsüblichen Recordern für V 8-Bänder beziehungsweise Betacam SP-Bänder mit den üblichen Laufgeschwindigkeiten bestimmt.

## Patentansprüche

1. Magnetischer Aufzeichnungsträger, bestehend aus einem nichtmagnetischen Schichtträger und mindestens einer darauf aufgetragenen magnetischen Schicht, die feinteilige magnetische Metallpulver oder Metall-Legierungspulver enthält, welche in einer Mischung von polymeren Bindemitteln, bestehend aus einem Vinylpolymer und einem Polycarbonat-Polyurethan in Gegenwart von Dispergierhilfsmitteln feinverteilt sind, dadurch gekennzeichnet, daß das Dispergierhilfsmittel eine dispergieraktive Verbindung ist, ausgewählt aus einem Polyalkylenoxid, welches wenigstens eine polare, zur Absorption am magnetischen Pigment befähigte Gruppe enthält, und wobei die magnetische Schicht einen Elastizitätsmodul von mindestens 5 500 MPa besitzt.

2. Magnetischer Aufzeichnungsträger nach Anspruch 1, dadurch gekennzeichnet, daß das Mengenverhältnis des Polycarbonat-Polyurethans zum Vinylpolymer im Bereich von 2 : 1 bis 1 : 2 liegt.

3. Aufzeichnungsträger gemäß Anspruch 1, dadurch gekennzeichnet, daß die dispergieraktive Verbindung ein carbonsäurehaltiges Polyalkylenoxidacrylat ist.
